# EUROPEAN PATENT APPLICATION

(11) **EP 1 108 688 A1**
(43) Date of publication of application: **20.06.2001**
(21) Application number: 00917398.0
(22) Date of filing: 21.04.2000
(51) Int. Cl.: C03B 11/12, C03B 11/00

(54) **METHOD AND APPARATUS FOR MOLDING OPTICAL DEVICE**

(30) Priority: 22.04.1999 JP 11444899
(71) Applicant: MATSUSHITA ELECTRIC INDUSTRIAL CO., LTD., Kadoma-shi, Osaka 571-8501 (JP)
(72) Inventor: KAMOHARA, Kiyotaka, Hirakata-shi, Osaka 573-0165 (JP); FUJII, Takeyuki, Toyonaka-shi, Osaka 560-0861 (JP); KAITO, Hiroaki, Suita-shi, Osaka 565-0832 (JP); NOGUCHI, Toshihiko, Neyagawa-shi, Osaka 572-0051 (JP); SAKAI, Yasuyuki, Osaka-shi, Osaka 547-0046 (JP)
(74) Representative: Grünecker, Kinkeldey, Stockmair & Schwanhäusser Anwaltssozietät
(86) International application number: JP0002605
(87) International publication number: WO0064823

(57) **Abstract**

The present invention provides a method and an apparatus for forming an optical element readily and stably by measuring a change in the shape of a glass material and using its data for the forming process without injuring the glass material and its molds. The apparatus comprises, for heating and forming the glass material (1) into a desired shape, an upper mold (2) joined with a heating member (15) having heaters 6a built therein, a lower mold (3) joined with a heating member 16 having heaters 6b built therein, a set of an upper shaft (7), a lower shaft (8), and a cylinder (9) for applying two or more level of the forming pressure, a nozzle 13 for holding and conveying the glass material (1), a rotary table (11) having a group of pockets (12) provided therein, means for calculating and controlling the speed of a movement of the molds, means for gradually increasing or decreasing the forming pressure in response to the speed of the movement of the molds to control the forming process, a sensor (10) for measuring the movement of the mold, and means for performing a controlling the forming process according to a setting temperature which is higher than the transition temperature of the glass material (1), the movement of the molds, and the speed of the movement of the molds.

## Description

### Technical Field

The present invention relates to a method and an apparatus for forming an optical element such as a glass lens or a glass molded product by pressing in a set of molds.

### Background Art

A conventional process of forming an optical element made of a glass material includes detecting the temperature of a set of upper and lower molds, heating the molds to a glass formable temperature which exceeds the transition temperature but is not higher than the softening point temperature of the glass material, and forming the glass material to a desired shape by pressing or the like.

Such a conventional forming process has however a drawback that the dimensional accuracy of a finished optical element is not always favorable. The thermal expansion coefficient of glass in a temperature range higher than the transition point is several times as great as one in the lower temperature range. The thermal expansion coefficient of glass material in such a higher temperature range is also greater than that of ceramic or metal, e.g. super steel, which is generally used for fabricating the molds . When the glass material is press-formed to a desired shape in the high temperature range, its shape remains at certain accuracy just after the forming process but may considerably be contracted as the temperature falls down to the transition temperature, and its dimensional accuracy is hardly maintained.

For solving the above drawback, the temperature of the glass material is preferably reduced to as close to the transition temperature as possible at a process of finally closing the mold during the forming process. It is however not easy to directly measure the temperature of the glass material. Also, since the temperature of the class material may vary depending upon measuring locations, a technique of controlling the forming process with the use of temperature measurements of the molds is limited in the accuracy.

### Disclosure of the Invention

It is hence an object of the present invention to provide an optical element forming method for placing a glass material between a pair of upper and lower molds, measuring and controlling the temperature of the molds to heat up the glass material together with the molds, and forming the glass material into an optical element. The forming method comprises:
(a) placing the glass material between the upper and lower molds which have been heated and maintained at a pre-heating temperature T1;
(b) then heating up the molds together with the glass material under proper control initiated by a certain temperature increasing instruction;
(c) when the temperature of the molds reaches a setting temperature T2 which is higher than the transition temperature T3 of the glass material, moving at least one of the upper and lower molds until the molds come into direct contact with the glass material, and applying a pressure P1 for loading to deform the glass material;
(d) then measuring the displacement S1 of the mold caused by softening and deforming of the glass material, applying a pressure P2 which is greater than P1 while measuring the speed of deforming the glass material, and confirming that a certain period of time when the viscosity of the glass material balances with the pressure P2 has elapsed;
(e) then shifting the forming pressure from P2 to P3 which is smaller than P2;
(f) then controlling the temperature of the molds in response to a temperature decreasing instruction to cool down the glass material, and when the temperature drops down to below the transition temperature T3, canceling to apply the forming pressure; and
(g) then moving at least one of the upper and lower molds, further cooling them down, and when the temperature drops down to the pre-heating temperature T1, unloading the finished optical element.

According to the present invention, the glass material remains not in direct contact with the molds before its temperature rises up to one higher than the transition temperature T3. When the deforming of the glass material is detected from the movement of the mold, the forming pressure is shifted to P2 for promoting the forming of the glass material into a desired shape. A difference in the contraction of the finished product and a difference in the contraction of the molds due to a change in the thermal expansion adjacent to the transition temperature T3 of the glass material are forcefully offset by the pressure P2.

It is an object of the present invention described above to form the glass material into a desired shape by e.g. pressing regardless of direct measurement of the temperature of the glass material and without injuring the glass material and the molds.

It is another object of the present invention to improve the accuracy of the forming process by the control to gradually increase or decrease the forming pressure in response to the speed of deforming the glass material.

It is a further object of the present invention to make the forming process less expensive by controlling the forming pressure by an air cylinder and an electromagnetic valve without using a servo mechanism.

It is a still further object of the present invention to detect the speed of deforming the glass material from the speed of movement of the mold.

It is a still further object of the present invention to acknowledge that the viscosity of the glass material balances with the pressure P2 when the speed of movement of the mold falls down to zero.

The present invention provides an optical element forming apparatus arranged for placing a glass material between a pair of upper and lower molds, measuring and controlling the temperature of the molds to heat up the glass material together with the molds, and forming the glass material into an optical element.

It is a still further object of the present invention to provide an apparatus for forming an optical element of a glass material at high accuracy. The apparatus comprises:
(a) means for setting the forming pressure to a pressure P2 and the deforming pressure of the glass material to a pressure P1 which is lower than the pressure P2;
(b) calculating and controlling means for gradually increasing or decreasing the forming pressure depending on the speed of movement of the molds;
(c) means for measuring the movement of the mold while the forming pressure is maintained at the pressure P1;
(d) means for calculating and controlling the speed of movement of the mold while the forming pressure is maintained at the pressure P2; and
(e) instructing means for performing an action of controlling the forming process according to a setting temperature T2 which is higher than the transition temperature of the glass material, the movement S1 of the mold, and the speed of movement of the mold.

The forming apparatus according to the present invention may include a nozzle and a rotary table for holding and conveying the glass material and the optical element, hence allowing both of them to be conveyed by a single mechanism.

The forming apparatus of the present invention may further employ a cylinder for driving the mold, hence making its structural arrangement simpler.

### Brief Description of the Drawings

Fig. 1 is a cross sectional front view of a primary part of an apparatus for forming an optical element showing an embodiment of the present invention; and

Figs. 2(a) through 2(c) are characteristic diagrams showing a temperature, a displacement, and a pressure respectively in a forming process.

### Detailed Description of the Preferred Embodiment

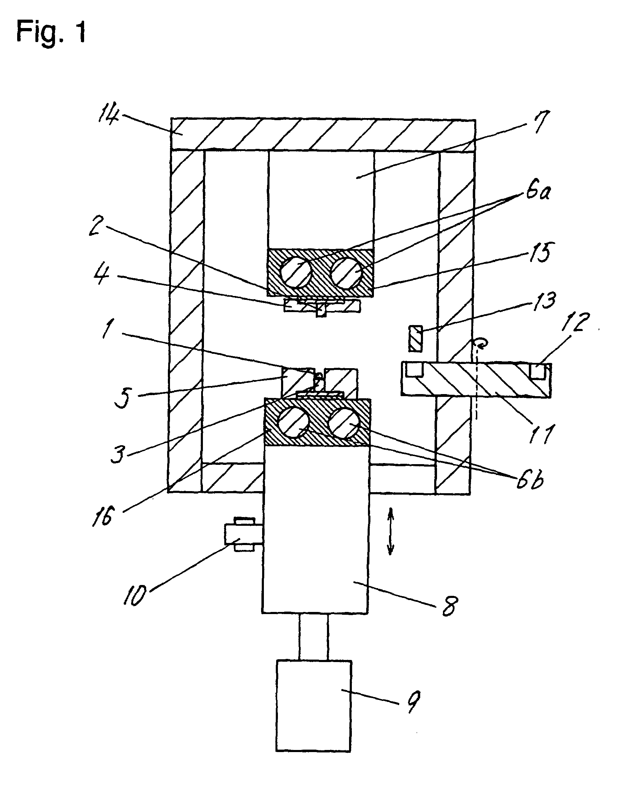

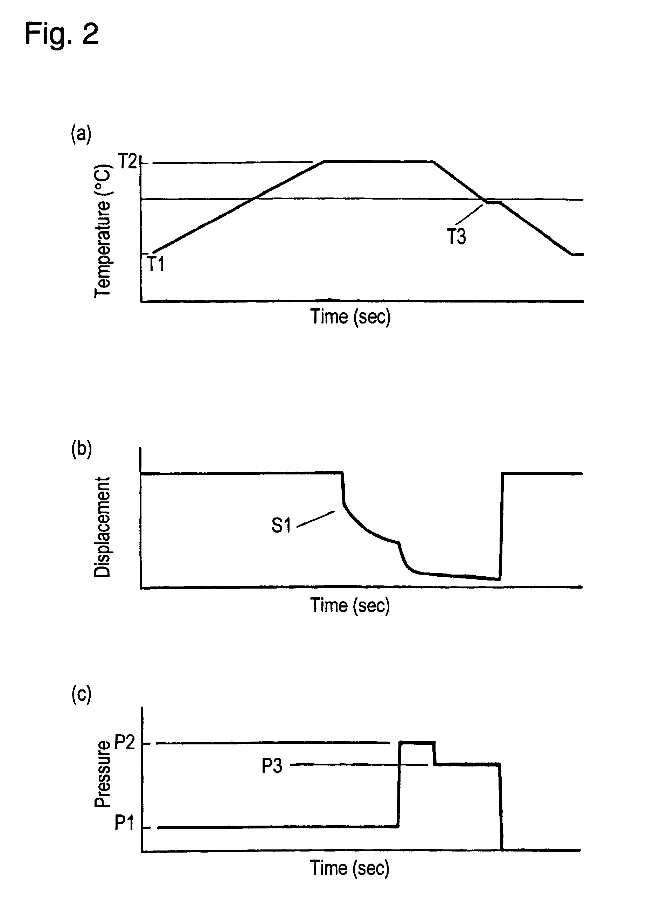

An embodiment of the present invention will be described referring to the relevant drawings. Fig. 1 is a cross sectional front view of a primary part of an apparatus for forming an optical element showing the embodiment of the present invention. Figs. 2(a) through 2(c) are characteristic diagram showing a temperature, a displacement, and a pressure respectively in a forming process.

An optical element forming apparatus of the embodiment of the present invention comprises, as shown in Fig. 1, upper mold 2 made of super steel, lower mold 3 made of the same and arranged corresponding to upper mold 2 for forming glass material 1 to an optical element, upper holder 4 for securely holding the upper mold 2 made of metal, and lower holder 5 securely holding the lower mold 3. Heating member 15 having upper holder 4 mounted to one side thereof are provided with built-in heaters 6a and joined to the inner side of main frame 14 by upper shaft 7 made of heat-resistant metal or ceramic.

Lower shaft 8 is driven by cylinder 9, which has very small frictional resistance, for upward and downward movements closely through one side of main frame 14. Also, another heating member 16 is provided with built-in heaters 6b and is joined at one side to the bottom of lower holder 5 and at another side to the distal end of lower shaft 8.

The apparatus also comprises rotary table 11 which can rotate to carry glass material 1 and its finished optical element between the outside and inside of the apparatus defined by main frame 14. It also comprises nozzle 13 arranged movable for suctioning and gripping glass material 1 or the optical element to transfer them between lower mold 3 and one of pockets 12. It further comprises sensor 10 mounted to one side of rotary table 11 for detecting the displacement of lower shaft 8 or lower mold 3 and plural pockets 12 on rotary table 11 for accepting and carrying glass material 1 or its finished optical element.

The action of the foregoing apparatus will now be described referring to Figs. 1 and 2. Pocket 12 provided on rotary table 11 located on one side of the forming apparatus is filled with glass material 1. Then, rotary table 11 is turned to convey glass material 1 into the inside of main frame 14 at an atmosphere of inert gas in the forming apparatus.

In the forming apparatus, glass material 1 is picked up and transferred by nozzle 13, of which the driving mechanism is not shown. Meanwhile, lower mold 3 remains at pre-heating temperature T1 which is lower than transition temperature T3 for minimizing the duration of the temperature of glass material 1 rising up to its setting temperature T2 higher than transition temperature T3. Glass material 1 is then loaded into lower mold 3.

After it is confirmed that lower mold 3 is filled with glass material 1, upper mold 2 and lower mold 3 are heated by heaters 6a and 6b of heating members 15 and 16 according to receiving a heating and controlling instruction, of which the system and mechanism is not shown.

As the temperature of upper mold 2 and lower mold 3 reach at setting temperature T2, lower mold 3 is lifted up by the action of low-friction cylinder 9 with an electromagnetic valve (not shown) to hold glass material 1 between upper mold 2 and lower mold 3. Pressure P1 for loading to deform is high enough to form glass material 1 to a desired shape at temperature T2.

Glass material 1 is rigid, fragile, and susceptible to fracture at a normal temperature and may injure the molds. However, as its temperature rises up, glass material 1 is declined in the viscosity. Once its temperature exceeds transition temperature T3, glass material 1 becomes soft and deformable.

The forming apparatus confirms the start of abrupt displacement S1 of glass material 1 maintained in its softened state at setting temperature T2 between upper mold 2 and lower mold 3. In turn, the forming apparatus shifts the load for deforming from pressure P1 to higher pressure P2 to shape glass material 1 in a short period while the temperature is kept at setting temperature T2. Pressure P2 and setting temperature T2 are maintained until the force of viscosity of glass material 1 becomes balanced with pressure P2.

At the time, it is preferable to calculate and control the pressure by steps of increase or decrease (with the use of an unshown system and mechanism) for forming glass material 1 to a desired shape as quick as possible based on the characteristic of glass material 1.

From measurements of sensor 10 indicating the displacement of lower mold 3 with time, the speed of deformation of glass material 1 is calculated and determined. Upon detecting that the force of viscosity of glass material 1 becomes balanced with pressure P2 or specifically the speed of the displacement is very close to zero, the forming apparatus shifts the load for forming from pressure P2 to lower pressure P3. After the pressure decreases, the temperature of glass material 1 with upper mold 2 and lower mold 3 is lowered down by a certain cooling control initiated according to a temperature decreasing instruction so as not to interrupt the surface of and the optical characteristics of a formed product. Pressure P3 may be equal to pressure P2.

The forming apparatus is responsive to the temperature decreasing instruction for performing the cooling control (of which the system and mechanism is not shown) for cooling down glass material 1 to pre-heating temperature T1, which is lower than transition temperature T3, without injuring the same. Simultaneously, any difference in the contraction due to a change in the thermal expansion between the formed product and the upper and lower molds can forcefully be offset by applying pressure P3 which is slightly smaller than pressure P2. This allows the press forming action to be carried out at accuracy by the forming apparatus regardless of the precise measurement of the temperature of glass material 1 via the upper and lower molds.

As it is confirmed that the temperature of glass material 1 decreases to below transition temperature T3, lower mold 3 together with the form product or an optical element is lifted down by the action of the cylinder 9. After the optical element is further cooled down to pre-heating temperature T1, it is picked up by the suction and holding action of nozzle 13 and transferred into pocket 12 of rotary table 11. When rotary table 11 is turned to convey the optical element to the outside of the apparatus, one cycle of the forming process is completed.

### Industrial Applicability

The method and the apparatus for forming an optical element according to the present invention permit a glass material to be formed to a highly-accurate shape of the optical element without acquiring the temperature of the glass material during the forming process. Also, while the glass material is protected from being injured as well as upper and lower molds, it can readily be formed to the optical element stably.

## Claims

1. A forming method of forming an optical element for placing a glass material between a pair of upper and lower molds, measuring and controlling a temperature of the molds to heat up the glass material together with the molds, and forming the glass material into an optical element, said forming method comprising the steps of:
(a) placing the glass material between the upper and lower molds heated and maintained at a pre-heating temperature T1;
(b) after said step (a), heating up the molds together with the glass material under proper control in response to a certain temperature increasing instruction;
(c) after said step (b), when a temperature of the molds reaches a setting temperature T2 which is higher than a transition temperature of the glass material, moving at least one of the upper and lower molds until the molds for making a direct contact between the glass material and the molds at a pressure P1 at which the grass material deforms;
(d) after said step (c), measuring a displacement S1 of the mold caused by softening and deforming of the glass material, applying a pressure P2 which is greater than the pressure P1 while measuring a speed of deforming the glass material, and confirming that a period of time when a viscosity of the glass material balances with the pressure P2 has elapsed;
(e) after said step (d), shifting a pressure from the pressure P2 to a pressure P3 which is smaller than the pressure P2;
(f) after said step (e), controlling a temperature of the molds in response to a temperature decreasing instruction to cool down the glass material, and when the temperature drops down to below the transition temperature T3, canceling to apply the forming pressure; and
(g) after the step (f), moving at least one of the upper and lower molds, further cooling down, and when the temperature drops down to the pre-heating temperature T1, unloading a finished optical element.

2. A forming method according to claim 1, wherein the forming pressure is gradually increased or decreased at the steps (c), (d), (e), and (f) depending on the speed of deforming the glass material.

3. A forming method according to claim 1 or 2, wherein the forming pressure is controlled by an action of an air cylinder and an electromagnetic valve.

4. A forming method according to claim 1, wherein the speed of deforming the glass material is measured from a speed of a movement of the molds.

5. A forming method according to claim 4, wherein it is confirmed that the viscosity of the glass material balances with the pressure P2 in accordance with that the speed of the movement of the molds becomes zero.

6. An optical element forming apparatus comprising a glass material between upper and lower molds, measuring and controlling the temperature of the molds to heat up the glass material together with the molds, and forming the glass material into an optical element, said apparatus comprising:
(a) means for determining a forming pressure to at least a pressure P2 for loading to deform the glass material and a pressure P1 which is lower than the pressure P2;
(b) calculating and controlling means for gradually increasing and decreasing the forming pressure depending on a speed of a movement of the molds;
(c) means for measuring the movement of the molds while the forming pressure is maintained at the pressure P1;
(d) means for calculating and controlling the speed of the movement of the molds while the forming pressure is maintained at the pressure P2; and
(e) action instructing means for performing an action of controlling the forming process according to a setting temperature T2 which is higher than a transition temperature of the glass material, a movement S1 of the molds, and the speed of the movement of the molds.

7. An optical element forming apparatus according to claim 6 further comprising:
(f) a nozzle and a rotary table for holding and conveying the glass material and the optical element.

8. An optical element forming apparatus according to claim 6 or 7, wherein the movement of the molds is implemented by a cylinder.
